# EUROPEAN PATENT SPECIFICATION

(11) **EP 4 436 189 B1**
(45) Date of publication and mention of the grant of the patent: **04.11.2026**
(21) Application number: 23814841.5
(22) Date of filing: 26.04.2023
(51) Int. Cl.: H04N 21/431, H04N 21/44, H04N 21/4788, H04N 21/488

(54) **BULLET SUBTITLE RECOGNITION METHOD AND RELATED DEVICE**
VERFAHREN ZUR ERKENNUNG VON KUGELUNTERTITELN UND ZUGEHÖRIGE VORRICHTUNG
PROCÉDÉ DE RECONNAISSANCE DE SOUS-TITRES À PUCE ET DISPOSITIF ASSOCIÉ

(30) Priority: 02.06.2022 CN 202210621235
(43) Date of publication of application: 25.09.2024
(73) Proprietor: Honor Device Co., Ltd., Shenzhen, Guangdong 518040 (CN)
(72) Inventor: QIU, Jianbin, Shenzhen, Guangdong 518040 (CN)
(74) Representative: Gill Jennings & Every LLP
(86) International application number: PCT/CN2023/090973
(87) International publication number: WO 2023/231655

(56) References cited:
- WO-A1-2021/175054
- CN-A- 106 210 853
- CN-A- 106 933 587
- CN-A- 109 151 966
- CN-A- 111 767 013
- CN-A- 114 205 673
- CN-A- 114 205 673
- CN-A- 114 245 208
- CN-A- 116 095 382
- US-A1- 2020 005 736
- US-A1- 20240 348 869
- US-A1- 20240 357 201

## Description

### TECHNICAL FIELD

This application relates to the field of terminal technologies, and in particular, to a bullet comment recognition method and a related apparatus.

### BACKGROUND

Currently, with development of terminal technologies, more terminal devices support video applications, and requirements of users on functions of the video applications, such as a bullet comment function of the video application, become more diverse.

In an implementation, a user can control switching on or off of the bullet comment function when a terminal device plays a video.

However, when the video including a bullet comment is played, the terminal device cannot recognize whether there is the bullet comment.

CN 113245208 A discloses a refresh rate setting method and a related device, aiming to meet a requirement of an electronic device for a refresh rate in a video playing process. US 2020/005736 A1 discloses a method and apparatus for controlling rendering of layers, and a terminal. CN 114205673 A1 discloses a refresh rate setting method and related equipment.

### SUMMARY

Embodiments of this application are applied to the field of terminal technologies, and provide a bullet comment recognition method and a related apparatus, to determine, according to a video frame rate and a drawing frequency corresponding to each layer, whether there is a bullet comment in a video interface of a target application, so that a terminal device can adjust device performance depending on whether there is the bullet comment in the video interface of the target application, to improve user experience. The invention is set out in the appended claims.

According to a first aspect of the disclosure, there is provided a bullet comment recognition method, including: obtaining a video frame rate of a target application and a drawing frequency corresponding to each layer of the target application in a drawing service within preset duration; and determining, according to the video frame rate and the drawing frequency corresponding to each layer, whether there is a bullet comment in a video interface of the target application.

In this way, because a drawing frequency corresponding to the bullet comment is greater than the video frame rate, in this method, a value of the video frame rate is compared with that of the drawing frequency corresponding to each layer to determine whether there is drawing corresponding to the bullet comment at each layer, to recognize whether there is the bullet comment in the video interface of the target application. A terminal device can adjust device performance depending on whether there is the bullet comment in the video interface of the target application, to improve user experience.

Optionally, the determining, according to the video frame rate and the drawing frequency corresponding to each layer, whether there is a bullet comment in a video interface of the target application includes: calculating a first quantity of drawing frame rates greater than the video frame rate in the drawing frequency corresponding to each layer; and when the first quantity is greater than 0, determining that there is the bullet comment in the video interface of the target application.

In this way, because the drawing frequency of the bullet comment is greater than the video frame rate, the quantity of drawing frame rates greater than the video frame rate in the drawing frequency may be calculated to determine that there is the bullet comment in the video interface of the target application, so that the terminal device adjusts the device performance to improve the user experience.

Optionally, the drawing frequency corresponding to each layer is recorded as a correspondence between a layer identifier and a drawing frequency corresponding to the layer identifier, a drawing frequency corresponding to any layer identifier is a ratio of a quantity of drawing times to the preset duration, the quantity of drawing times is a quantity of drawing times of the any layer identifier within the preset duration, and there are one or more layers of the target application in the drawing service.

In this way, the drawing frequency corresponding to each layer is recorded by using the correspondence between a layer identifier and a drawing frequency corresponding to the layer identifier. When there are one or more layers of the target application in the drawing service, it is convenient to compare a value relationship between the video frame rate and the drawing frequency corresponding to each layer.

Optionally, after the determining, according to the video frame rate and the drawing frequency corresponding to each layer, whether there is a bullet comment in a video interface of the target application, the method further includes: when determining that there is no bullet comment in the video interface of the target application, monitoring whether the drawing frequency corresponding to each layer of the target application in the drawing service changes; and when detecting that the drawing frequency corresponding to each layer of the target application in the drawing service changes, determining that there is a bullet comment in the video interface of the target application.

In this way, it is simple and intuitive to determine, by monitoring whether the drawing frequency corresponding to each layer of the target application in the drawing service changes, whether there is a sudden bullet comment in the video interface of the target application, and the terminal device can adjust the device performance depending to whether there is the bullet comment in the video interface of the target application, to improve the user experience.

Optionally, the monitoring whether the drawing frequency corresponding to each layer of the target application in the drawing service changes includes: recording a drawing frequency of each layer of the target application in the drawing service according to a preset period; for any record obtained according to the preset period, comparing a drawing frequency in the record with the drawing frequency corresponding to each layer obtained within the preset duration; and for any layer in the drawing service, when a difference between a drawing frequency of the layer in any record and the drawing frequency corresponding to the layer obtained within the preset duration is greater than or equal to a threshold, determining that the drawing frequency corresponding to each layer of the target application in the drawing service changes; or when a difference between a drawing frequency of the layer in any record and the drawing frequency corresponding to the layer obtained within the preset duration is less than the threshold, determining that the drawing frequency corresponding to each layer of the target application in the drawing service does not change.

In this way, a difference between a drawing frequency of any layer in any record and a drawing frequency corresponding to the layer obtained within the preset duration or a drawing frequency in a previous record is calculated, to determine whether the drawing frequency corresponding to each layer of the target application in the drawing service changes, so that it is determined whether there is the sudden bullet comment in the video interface of the target application, and the terminal device adjusts the device performance to improve the user experience.

Optionally, the obtaining a video frame rate of a target application and a drawing frequency corresponding to each layer of the target application in a drawing service within preset duration includes: when the target application starts video playing, a video in the target application is displayed in full-screen mode, a terminal device displaying the video interface of the target application switches between a landscape mode and a portrait mode, and/or the video interface of the target application receives a user operation, obtaining the video frame rate of the target application and the drawing frequency corresponding to each layer of the target application in the drawing service within the preset duration.

In this way, the video frame rate of the target application and the drawing frequency corresponding to each layer of the target application in the drawing service within the preset duration are obtained in the foregoing scenarios in which a bullet comment function may be triggered to be on or off, to recognize whether there is the bullet comment in the video interface of the target application, so that the terminal device adjusts the device performance to improve the user experience. Furthermore, there is no other object in the video interface when the video in the target application is displayed in full-screen mode, to reduce interference caused by another object when whether there is the bullet comment in the video interface of the target application is recognized.

Optionally, the obtaining the video frame rate of the target application includes: obtaining the video frame rate of the target application in a media codec Media Codec.

In this way, the video frame rate of the video in the target application is obtained from the media codec, to determine whether there is bullet comment drawing whose drawing frame rate is greater than the video frame rate in the drawing service, so that whether there is the bullet comment in the video interface of the target application is recognized, and the terminal device adjusts the device performance to improve the user experience.

Optionally, the method further includes: increasing a screen refresh rate when determining that there is the bullet comment in the video interface of the target application; or decreasing a screen refresh rate when determining that there is no bullet comment in the video interface of the target application.

In this way, the terminal device can adjust the screen refresh rate depending on whether there is the bullet comment. When recognizing that there is the bullet comment, the terminal device can correspondingly increase the screen refresh rate slightly to prevent a bullet comment scrolling image from being frozen. When recognizing that there is no bullet comment, the terminal device can correspondingly decrease the screen refresh rate slightly to reduce load and power consumption of a processor, thereby improving the user experience.

According to a second aspect of the disclosure, there is provided a terminal device. The terminal device may also be referred to as a terminal (terminal), user equipment (user equipment, UE), a mobile station (mobile station, MS), a mobile terminal (mobile terminal, MT), and the like. The terminal device may be a mobile phone (mobile phone), a smart television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device includes: a touchscreen, where the touchscreen includes a touch panel and a display screen; one or more processors; a memory; a plurality of application programs; and one or more computer programs, where the one or more computer programs are stored in the memory, and include instructions; and the instructions, when executed by the terminal device, cause the terminal device to perform the following steps: obtaining a video frame rate of a target application and a drawing frequency corresponding to each layer of the target application in a drawing service within preset duration; and determining, according to the video frame rate and the drawing frequency corresponding to each layer, whether there is a bullet comment in a video interface of the target application.

Optionally, the determining, according to the video frame rate and the drawing frequency corresponding to each layer, whether there is a bullet comment in a video interface of the target application includes: calculating a first quantity of drawing frame rates greater than the video frame rate in the drawing frequency corresponding to each layer; and when the first quantity is greater than 0, determining that there is the bullet comment in the video interface of the target application.

Optionally, the drawing frequency corresponding to each layer is recorded as a correspondence between a layer identifier and a drawing frequency corresponding to the layer identifier, a drawing frequency corresponding to any layer identifier is a ratio of a quantity of drawing times to the preset duration, the quantity of drawing times is a quantity of drawing times of the any layer identifier within the preset duration, and there are one or more layers of the target application in the drawing service.

Optionally, after the determining, according to the video frame rate and the drawing frequency corresponding to each layer, whether there is a bullet comment in a video interface of the target application, the method further includes: when determining that there is no bullet comment in the video interface of the target application, monitoring whether the drawing frequency corresponding to each layer of the target application in the drawing service changes; and when detecting that the drawing frequency corresponding to each layer of the target application in the drawing service changes, determining that there is a bullet comment in the video interface of the target application.

Optionally, the monitoring whether the drawing frequency corresponding to each layer of the target application in the drawing service changes includes: recording the drawing frequency of each layer of the target application in the drawing service according to a preset period; for any record obtained according to the preset period, comparing a drawing frequency in the record with the drawing frequency corresponding to each layer obtained within the preset duration; and for any layer in the drawing service, when a difference between a drawing frequency of the layer in any record and the drawing frequency corresponding to the layer obtained within the preset duration is greater than or equal to a threshold, determining that the drawing frequency corresponding to each layer of the target application in the drawing service changes; or when a difference between a drawing frequency of the layer in any record and the drawing frequency corresponding to the layer obtained within the preset duration is less than the threshold, determining that the drawing frequency corresponding to each layer of the target application in the drawing service does not change.

Optionally, the obtaining a video frame rate of a target application and a drawing frequency corresponding to each layer of the target application in a drawing service within preset duration includes: when the target application starts video playing, a video in the target application is displayed in full-screen mode, a terminal device displaying the video interface of the target application switches between a landscape mode and a portrait mode, and/or the video interface of the target application receives a user operation, obtaining the video frame rate of the target application and the drawing frequency corresponding to each layer of the target application in the drawing service within the preset duration.

Optionally, the obtaining the video frame rate of the target application includes: obtaining the video frame rate of the target application in a media codec Media Codec.

Optionally, the method further includes: increasing a screen refresh rate when determining that there is the bullet comment in the video interface of the target application; or decreasing a screen refresh rate when determining that there is no bullet comment in the video interface of the target application.

According to a third aspect of the disclosure, there is provided a terminal device, including: a processor and a memory, where the processor is configured to call a program in the memory, to cause the terminal device to perform the method according to the first aspect.

According to a fourth aspect of the disclosure, there is provided a computer-readable storage medium. The computer-readable storage medium stores computer instructions, and the computer instructions, when run on a terminal device, cause the terminal device to perform the method according to the first aspect.

According to a fifth aspect of the disclosure, there is provided a computer program product. The computer program product includes a computer program, and the computer program, when run, causes a computer to perform the method according to the first aspect.

For beneficial effects of the possible implementations of the second aspect to the fifth aspect, refer to the beneficial effects brought by the first aspect, and details are not described herein again.

### BRIEF DESCRIPTION OF DRAWINGS

FIG. 1 is a schematic structural diagram of a terminal device according to an embodiment of this application;
FIG. 2 is a block diagram of a software structure of a terminal device according to an embodiment of this application;
FIG. 3 is a schematic diagram of a scenario to which embodiments of this application are applicable;
FIG. 4 is a schematic flowchart of a bullet comment recognition method according to an embodiment of this application;
FIG. 5 is a schematic flowchart of the bullet comment recognition method according to the invention;
FIG. 6 is a schematic structural diagram of a bullet comment recognition apparatus according to an embodiment of this application; and
FIG. 7 is a schematic diagram of a hardware structure of a bullet comment recognition apparatus according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions and purposes. For example, an interface of a first target function and an interface of a second target function are for distinguishing between different response interfaces, and are not intended to limit a sequence between the interfaces. A person skilled in the art may understand that the terms such as "first" and "second" are not intended to limit a quantity or an execution sequence. In addition, the terms such as "first" and "second" do not indicate a definite difference.

It should be noted that in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. In particular, the terms such as "example" or "for example" as used herein are intended to present a related concept in a specific manner.

Embodiments of this application provide a bullet comment recognition method that can be applied to an electronic device that supports application software such as a video application or a live-streaming application and that has a bullet comment function. The electronic device includes a terminal device, where the terminal device may also be referred to as a terminal (terminal), user equipment (user equipment, UE), a mobile station (mobile station, MS), a mobile terminal (mobile terminal, MT), and the like. The terminal device may be a mobile phone (mobile phone), a smart television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Embodiments of this application impose no limitation on a specific technology and a specific device form used by the terminal device.

To better understand embodiments of this application, the following describes a structure of the terminal device in embodiments of this application.

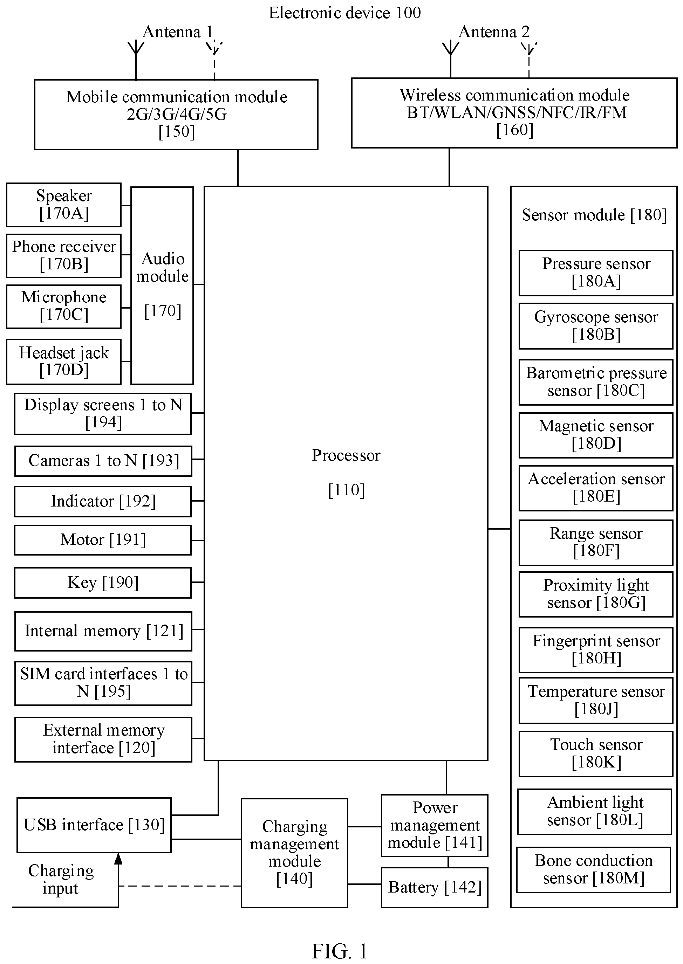

FIG. 1 is a schematic structural diagram of a terminal device 100. The terminal device 100 may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure as an example in this embodiment of this application does not constitute a specific limitation on the terminal device 100. In some other embodiments of this application, the terminal device 100 may include more or fewer components than those shown in the figure, combine or split some components, or have different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate components, or may be integrated into one or more processors.

The controller may generate an operation control signal according to instruction operation code and a time-sequence signal, and control obtaining and execution of instructions.

A memory may be further disposed in the processor 110, and is configured to store instructions and data.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal serial bus (universal serial bus, USB) interface, and/or the like.

The I2C interface is a two-way synchronization serial bus, and includes one serial data line (serial data line, SDA) and one serial clock line (derail clock line, SCL).

The I2S interface may be configured to perform audio communication.

The PCM interface may also be configured to perform audio communication, to sample, quantize, and encode an analog signal.

A UART interface is a universal serial data bus, and is configured to perform asynchronous communication. The bus may be a two-way communication bus, and converts to-be-transmitted data between serial communication and parallel communication.

A MIPI interface may be configured to connect the processor 110 and a peripheral component such as the display screen 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal device 100. The processor 110 communicates with the display screen 194 through the DSI interface, to implement a display function of the terminal device 100. For example, in this embodiment of this application, the processor 110 communicates with the display screen 194 through the DSI interface, to display, on the display screen 194, a video and a bullet comment that are involved in any bullet comment recognition method provided in embodiments of this application.

A GPIO interface may be configured by software. The GPIO interface may be configured as a control signal or a data signal.

The USB interface 130 is an interface that complies with the USB standard specification, and may be specifically a Mini USB interface, a Micro USB interface, a USB Type C interface, or the like. The USB interface 130 may be configured to be connected to a charger to charge the terminal device 100, may be used for data transmission between the terminal device 100 and a peripheral device, and may also be configured to be connected to a headset to play audio through the headset. The interface may also be configured to be connected to another electronic device such as an AR device.

It may be understood that an interface connection relationship between the modules illustrated in this embodiment of this application is merely an example for description, and does not constitute a limitation on the structure of the terminal device 100. In some other embodiments of this application, the terminal device 100 may alternatively use an interface connection manner different from that in the foregoing embodiment, or use a combination of a plurality of interface connection manners.

A wireless communication function of the terminal device 100 may be implemented through the antenna 1, the antenna 2, the mobile communication module 150, the wireless communication module 160, the modem processor, the baseband processor, and the like.

The terminal device 100 implements a display function through the GPU, the display screen 194, the application processor, and the like. The GPU is a microprocessor for image processing and connects the display screen 194 and the application processor. The GPU is configured to perform mathematical and geometric calculation and render graphics. The processor 110 may include one or more GPUs that execute program instructions to generate or change display information. For example, in this embodiment of this application, the GPU may be configured to display, on the display screen 194, the video and the bullet comment that are involved in any bullet comment recognition method provided in embodiments of this application.

The display screen 194 is configured to display an image, a video, and the like. The display screen 194 includes a display panel. The display panel may use a liquid crystal display screen (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diodes, QLED), or the like. In some embodiments, the terminal device 100 may include one or N display screens 194, where N is a positive integer greater than 1. For example, in this embodiment of this application, the display screen 194 may be configured to display the video and the bullet comment that are involved in any bullet comment recognition method provided in embodiments of this application.

The terminal device 100 can implement the photographing function through the ISP, the camera 193, the video codec, the GPU, the display screen 194, the application processor, and the like.

The digital signal processor is configured to process a digital signal, and may further process another digital signal in addition to a digital image signal.

The video codec is configured to compress or decompress a digital video. The terminal device 100 can support one or more types of video codecs. In this way, the terminal device 100 may play or record videos in a plurality of encoding formats, for example, moving picture experts group (moving picture experts group, MPEG) 1, MPEG 2, MPEG 3, and MPEG 4. For example, in this embodiment of this application, the video codec may be configured to decode a video played in a video application involved in any bullet comment recognition method provided in embodiments of this application.

The external memory interface 120 may be configured to be connected to an external storage card such as a micro SD card, to extend a storage capability of the terminal device 100. The external storage card communicates with the processor 110 through the external memory interface 120, to implement a data storage function.

The internal memory 121 may be configured to store computer-executable program code, where the executable program code includes instructions. The internal memory 121 may include a program storage area and a data storage area.

The terminal device 100 can implement an audio function, for example, music playing and recording, through the audio module 170, the speaker 170A, the phone receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal.

The key 190 includes a power key, a volume key, and the like. The key 190 may be a mechanical key, or may be a touch key. The terminal device 100 may receive a key input, and generate a key signal input related to user setting and function control of the terminal device 100.

The SIM card interface 195 is configured to be connected to a SIM card. The SIM card may be inserted into the SIM card interface 195 or plugged from the SIM card interface 195 to come into contact with or be separated from the terminal device 100. The terminal device 100 may support one or N SIM card interfaces, where N is a positive integer greater than 1. The SIM card interface 195 can support a nano SIM card, a micro SIM card, a SIM card, and the like. A plurality of cards may be inserted into the same SIM card interface 195 simultaneously. The plurality of cards may be of a same type or different types. The SIM card interface 195 may be compatible with different types of SIM cards. The SIM card interface 195 may also be compatible with an external storage card. The terminal device 100 interacts with a network through the SIM card, to implement a call function, a data communication function, and the like.

A software system of the terminal device 100 may use a layered architecture, an event driven architecture, a micro-core architecture, a micro-service architecture, a cloud architecture, or the like. In this embodiment of this application, an Android system of a layered architecture is used as an example to illustrate the software structure of the terminal device 100.

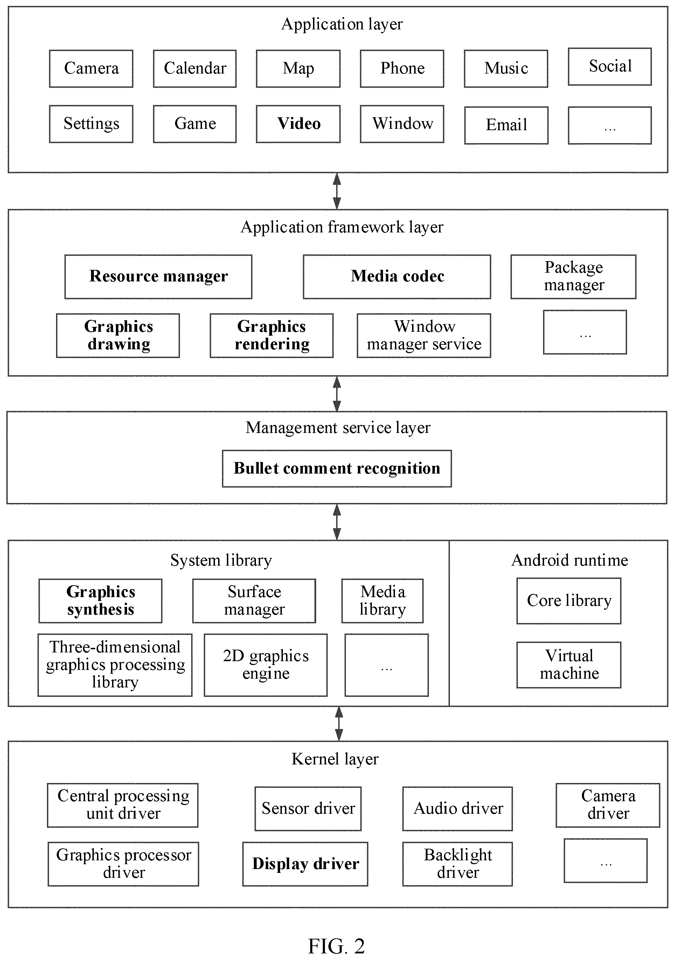

FIG. 2 is a block diagram of the software structure of the terminal device 100 according to an embodiment of this application. In the layered architecture, software is divided into several layers, and each layer has a clear role and task. The layers communicate with each other through a software interface. In some embodiments, the Android system is divided into five layers, namely, an application layer, an application framework layer, a management service layer, Android runtime (Android runtime) and a system library, and a kernel layer from top to bottom.

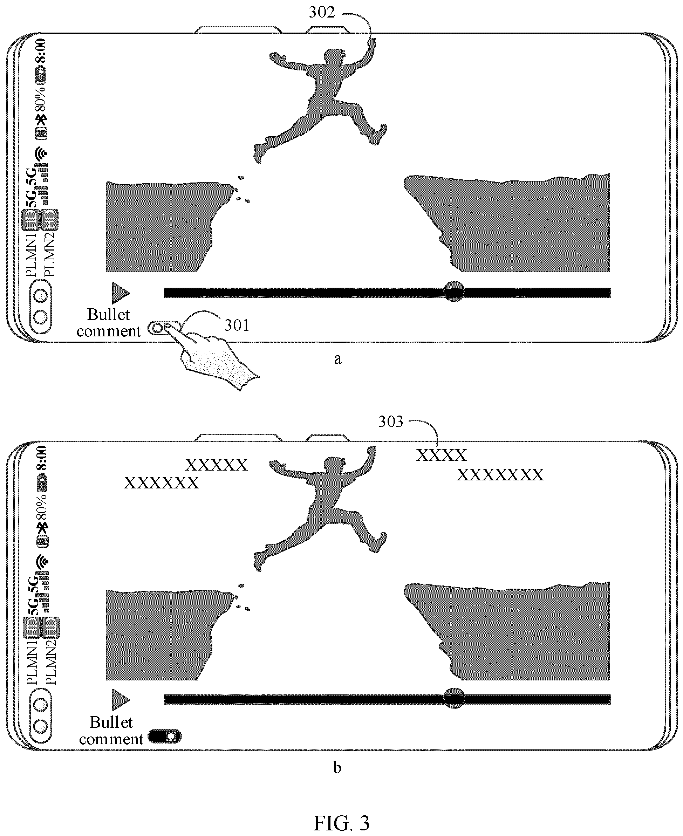

The application layer may include a series of application packages. As shown in FIG. 3, the application package may include applications such as camera, calendar, phone, map, game, and video.

The video application is used for providing a video playing function for a user.

The application framework layer provides an application programming interface (application programming interface, API) and a programming framework for the applications at the application layer. The application framework layer includes some predefined functions.

As shown in FIG. 3, the application framework layer may include a media codec, a resource manager, a notification manager, graphics drawing, graphics rendering, and the like.

The media codec is configured to decode a video that needs to be played in the video application, and obtain a source video frame rate and video playing/stop information.

The resource manager provides various resources, such as landscape/portrait switching, an icon, a picture, a layout file, and a video file, for the applications.

The graphics drawing is used for drawing graphics, such as video and/or bullet comment drawing in the video application.

The graphics rendering is used for rendering the drawn graphics. For example, after the graphics drawing completes drawing of a video and/or a bullet comment in the video application, the graphics rendering renders the video and/or the bullet comment.

A window manager service (window manager service, WMS) is used for managing a window program. The window manager service may obtain a size of a display screen, determine whether there is a status bar, perform screen locking, take a screenshot of the screen, and so on.

A package manager is used for program management in the system, for example, application installation, uninstall, and upgrade.

The management service layer includes bullet comment recognition and the like.

The bullet comment recognition is used for recognizing the bullet comment in the video application.

The Android runtime includes a core library and a virtual machine. The Android runtime is responsible for scheduling and managing the Android system.

The core library includes two parts: a performance function that a Java language needs to invoke and a core library of Android.

The application layer and the application framework layer are run in the virtual machine. The virtual machine executes Java files of the application layer and the application framework layer as binary files. The virtual machine is used for executing functions such as object lifecycle management, stack management, thread management, security and exception management, and garbage collection.

The system library may include a plurality of function modules, for example, graphics synthesis, a surface manager (surface manager), a media library (Media Libraries), a three-dimensional graphics processing library (for example, OpenGL ES), and a 2D graphics engine (for example, an SGL).

The graphics synthesis is used for synthesizing one or more rendered views into a display interface, for example, synthesizing videos and/or bullet comments in the video application after drawing and rendering.

The surface manager is used for managing a display subsystem, and providing fusion of 2D and 3D layers for a plurality of applications.

The media library supports playback and recording in a plurality of common audio and video formats, and also supports static image files and the like. The media library can support a plurality of audio and video encoding formats, such as MPEG4, H.264, MP3, AAC, AMR, JPG, and PNG.

The three-dimensional graphics processing library is used for implementing three-dimensional graphics drawing, image rendering, synthesis, layer processing, and the like.

The 2D graphics engine is a drawing engine for 2D drawing.

The kernel layer is a layer between hardware and software. The kernel layer may include a display driver, a camera driver, an audio driver, a central processing unit driver, and the like.

The display driver is used for displaying an interface, for example, a video and/or bullet comment interface in the video application, that is obtained through a process such as drawing, rendering, and synthesis.

With reference to a scenario in which an application starts or interface switching occurs in the application, the following describes an example of a working process of software and hardware of the terminal device 100.

When the touch sensor 180K receives a touch operation, a corresponding hardware interrupt is sent to the kernel layer. The kernel layer processes the touch operation into an original input event (including information such as touch coordinates, touch strength, and a time stamp of the touch operation). The original input event is stored at the kernel layer. The application framework layer obtains the original input event from the kernel layer, and recognizes a control corresponding to the input event. Using an example in which the touch operation is a one-tap operation, and a control corresponding to the one-tap operation is a control of an icon of the video application, the video application invokes an interface of the application framework layer to start the video application, and further invokes the kernel layer to start a display driver, to display a function interface of the video application.

With development of terminal technologies, more terminal devices support video applications, and requirements of users on functions of the video applications, such as a bullet comment function of the video application, become more diverse. The technical solutions provided in embodiments of this application can be applied to the video application that supports the bullet comment function, and especially, to recognizing a bullet comment in a video playing process.

In an implementation, a user can control switching on or off of the bullet comment function when the terminal device plays a video. For example, the user may switch on or off a bullet comment by tapping a "bullet comment" button. After the bullet comment function is on, a scrolling bullet comment appears in the video playing process.

For example, when the bullet comment is on, a screen refresh rate of 60 Hz is needed to meet a mobile display requirement of the bullet comment. When the bullet comment is off, only a screen refresh rate of 30 Hz is needed to meet a smooth display requirement of most videos. As a result, because the scrolling bullet comment further needs to be dynamically displayed in a video interface, a requirement on the refresh rate in a scenario in which the bullet comment function is on in the video playing process is higher than that in a scenario in which the bullet comment function is off.

However, in the foregoing method, the terminal device cannot recognize whether there is a bullet comment in the video application, and consequently cannot adjust device performance depending on whether there is the bullet comment, causing poor user experience. For example, the terminal device cannot adjust the screen refresh rate depending on whether there is the bullet comment.

In view of this, in the bullet comment recognition method provided in embodiments of this application, the terminal device obtains a video frame rate of a target application and a drawing frequency corresponding to each layer of the target application in a drawing service within preset duration, and determines, according to the video frame rate and the drawing frequency corresponding to each layer, whether there is a bullet comment in a video interface of the target application. Because a drawing frequency corresponding to a bullet comment is greater than the video frame rate, in this method, a value of the video frame rate is compared with that of the drawing frequency corresponding to each layer to determine whether there is drawing corresponding to the bullet comment at the layer, to recognize whether there is the bullet comment in the target application. The terminal device can adjust device performance depending on whether there is the bullet comment, to improve user experience.

FIG. 3 is a schematic diagram of a scenario to which the bullet comment recognition method in embodiments of this application is applicable.

As shown in a in FIG. 3, a bullet comment function is off in a video playing process, and a video being played is displayed in a video playing interface. When a user taps a "bullet comment" button 301 to switch on the bullet comment function, a bullet comment 303 as shown in b in FIG. 3 appears in the video playing interface.

For example, a terminal device may recognize whether there is a bullet comment in a video interface of a target application, to adjust device performance. Using a screen refresh rate as an example, when the video played in a in FIG. 3 is a movie, only a refresh rate of 30 Hz is needed to meet a requirement for smoothly displaying an image. A requirement on the refresh rate in the scenario as shown in b in FIG. 3 in which the bullet comment function is on in the video playing process is higher than that in the scenario as shown in a in FIG. 3 in which the bullet comment is off. Therefore, the terminal device can adjust the screen refresh rate depending on whether there is the bullet comment. When recognizing that there is the bullet comment, the terminal device can correspondingly increase the screen refresh rate slightly. When recognizing that there is no bullet comment, the terminal device can correspondingly decrease the screen refresh rate slightly.

The bullet comment recognition method in embodiments of this application is described below in detail with reference to specific embodiments. The following embodiments may be combined with each other or separately implemented, and same or similar concepts or processes may not be described repeatedly in some embodiments.

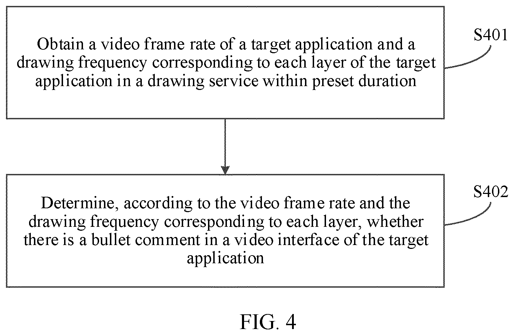

FIG. 4 is a schematic flowchart of a bullet comment recognition method according to an embodiment of this application. As shown in FIG. 4, the method may include the following steps.

S401: Obtain a video frame rate of a target application and a drawing frequency corresponding to each layer of the target application in a drawing service within preset duration.

In this embodiment of this application, the target application may be an application with a video playing function, for example, a video application, a live-streaming application, or a music application that can play a music video. The video frame rate may be understood as a frame rate at which a video played in the target application is output to a display screen through a video card. Different target applications may correspond to different video frame rates.

In this embodiment of this application, the drawing service may be used for performing processing such as drawing, rendering, and synthesizing on the video and/or a bullet comment in the target application. The drawing frequency corresponding to each layer of the target application in the drawing service may be a ratio of a quantity of drawing times that corresponds to each layer to the preset duration.

It should be noted that the preset duration may be understood as a specific period of time in a video playing process, and for example, may be set to 100 ms. A specific value of the preset duration is not limited in this embodiment of this application.

For example, in the drawing service, drawing in the target application may include video drawing and/or bullet comment drawing. When there is the bullet comment in the video playing process, the drawing in the target application includes the video drawing and the bullet comment drawing. When there is no bullet comment in the video playing process, the drawing in the target application includes the video drawing.

In a possible implementation, when there is no bullet comment in the video playing process, the target application includes a video layer in the drawing service. In this case, a drawing frequency corresponding to the video layer in the drawing service within the preset duration is obtained.

In another possible implementation, when there is the bullet comment in the video playing process, the video drawing and the bullet comment drawing are at a same layer. In this case, a drawing frequency corresponding to the layer in the drawing service within the preset duration is obtained. The drawing frequency corresponding to the layer is the larger of a video drawing frequency and a bullet comment drawing frequency. For example, the bullet comment drawing frequency may be greater than the video frame rate. In this case, the drawing frequency corresponding to the layer is the bullet comment drawing frequency. For example, if the drawing frequency corresponding to the video drawing is 30 Hz, and the drawing frequency corresponding to the bullet comment drawing is 60 Hz, the drawing frequency corresponding to the layer is 60 Hz.

In another possible implementation, when there is the bullet comment in the video playing process, the video drawing and the bullet comment drawing are at different layers. In this case, a drawing frequency corresponding to a video layer and a drawing frequency corresponding to a bullet comment layer in the drawing service within the preset duration are obtained.

S402: Determine, according to the video frame rate and the drawing frequency corresponding to each layer, whether there is a bullet comment in a video interface of the target application.

In this embodiment of this application, the bullet comment may be understood as a comment subtitle that pops up when the video is watched. Different videos may correspond to different bullet comment content and different quantities of bullet comments, and different bullet comments are sent at different time points. The bullet comment may appear at a specific time point in the video, and bullet comments sent at a same time point basically have a same subject.

For example, a user 1 posts one bullet comment when a video is played until the 43rd minute. In this case, when watching the video, another user can see, at the 43rd minute of the video, the bullet comment posted by the user 1. In addition, among bullet comments sent at the 43rd minute, bullet comment content sent by most users are comments posted for content played around the 43rd minute.

For example, a value relationship between the video frame rate and the drawing frequency corresponding to each layer in the drawing service within the preset duration is compared, and whether there is the bullet comment is determined according to the value relationship.

In a possible implementation, when there is no bullet comment in the video playing process, the target application includes the video layer in the drawing service. In this case, the video frame rate and the drawing frequency corresponding to the video layer in the drawing service within the preset duration may be compared to determine whether there is the bullet comment in the video interface of the target application.

In another possible implementation, when there is the bullet comment in the video playing process, the video drawing and the bullet comment drawing are at the same layer. In this case, the video frame rate and the drawing frequency corresponding to the layer in the drawing service within the preset duration may be compared to determine whether there is the bullet comment in the video interface of the target application.

In another possible implementation, when there is the bullet comment in the video playing process, the video drawing and the bullet comment drawing are at the different layers. In this case, the video frame rate may be compared with the drawing frequency corresponding to the video layer and the drawing frequency corresponding to the bullet comment layer in the drawing service within the preset duration, to determine whether there is the bullet comment in the video interface of the target application.

In the bullet comment recognition method provided in this embodiment of this application, the terminal device obtains the video frame rate of the target application and the drawing frequency corresponding to each layer of the target application in the drawing service within the preset duration, and determines, according to the video frame rate and the drawing frequency corresponding to each layer, whether there is the bullet comment in the video interface of the target application. Because the drawing frequency corresponding to the bullet comment is greater than the video frame rate, in this method, the value of the video frame rate is compared with that of the drawing frequency corresponding to each layer to determine whether there is the drawing corresponding to the bullet comment at each layer, to recognize whether there is the bullet comment in the video interface of the target application. The terminal device can adjust device performance depending on whether there is the bullet comment in the video interface of the target application, to improve user experience.

Optionally, based on the embodiment corresponding to FIG. 4, in the method in this embodiment of this application:

In a possible implementation, the obtaining a video frame rate of a target application and a drawing frequency corresponding to each layer of the target application in a drawing service within preset duration includes: when the target application starts video playing, the video in the target application is displayed in full-screen mode, the terminal device displaying the video interface of the target application switches between a landscape mode and a portrait mode, and/or the video interface of the target application receives a user operation, obtaining the video frame rate of the target application and the drawing frequency corresponding to each layer of the target application in the drawing service within the preset duration.

In this embodiment of this application, that the target application starts video playing may be understood as starting video playing in the target application. It should be noted that, the video may be a live-streaming video, a recorded video, a television drama, a movie, or the like. For example, video playing in the video application or live-streaming playing in the live-streaming application is started.

In this embodiment of this application, full-screen display may be understood as displaying a needed window in a largest size on a screen. That the video in the target application is displayed in full-screen mode may be understood as: The video is displayed in the largest size on the screen when the target application plays the video. For example, when the video is displayed in full-screen mode, the video may cover the whole screen.

In this embodiment of this application, the switching between the landscape mode and the portrait mode may be switching from the landscape mode to the portrait mode or switching from the portrait mode to the landscape mode. That the terminal device displaying the video interface switches between a landscape mode and a portrait mode may be understood as switching the terminal device between the landscape mode and the portrait mode when a display interface of the terminal device is the video interface. The landscape mode may be the full-screen mode.

In this embodiment of this application, that the video interface receives a user operation may be understood as: The video interface may receive the user operation when the user operates the video interface by touching the screen or tapping a button. For example, as shown in FIG. 3, the user taps the "bullet comment" button 301 in the video interface, and the bullet comment function is switched on after the video interface receives the operation of tapping the "bullet comment" button 301 by the user.

For example, the video frame rate of the target application and the drawing frequency corresponding to each layer of the target application in the drawing service within the preset duration are obtained in one or more of the scenarios in which the target application starts the video playing, the video in the target application is displayed in full-screen mode, the terminal device displaying the video interface switches between the landscape mode and the portrait mode, the video interface receives the user operation, and so on.

For example, a plurality of the foregoing scenarios may include: The target application starts the video playing, and the video is displayed in full-screen mode. Alternatively, the terminal device switches from the landscape mode to the portrait mode when the video in the target application is displayed in full-screen mode. Alternatively, the video interface receives the user operation when the video in the target application is displayed in full-screen mode. Alternatively, the terminal device displaying the video interface switches from a portrait and non-full-screen mode to a landscape and full-screen mode.

It may be understood that because the target application switches on or off the bullet comment function by default, when the target application starts the video playing, the video frame rate of the target application and the drawing frequency corresponding to each layer of the target application in the drawing service within the preset duration may be obtained, to recognize whether there is the bullet comment in the video interface of the target application, so that the terminal device adjusts the device performance to improve the user experience.

It may be understood that in a possible implementation, the landscape mode may correspond to the full-screen mode, and the portrait mode may correspond to a non-full-screen mode. On the premise that the target application switches on the bullet comment function, the bullet comment appears in the video interface when the video interface is displayed in full-screen mode, and no bullet comment appears in the video interface when the video interface is displayed in non-full-screen mode. Therefore, when the terminal device displaying the video interface switches between the landscape mode and the portrait mode, a status of the bullet comment in the video interface may change. For example, the video interface is in the landscape mode and displayed in full-screen mode, and there is the bullet comment. When the terminal device switches from the landscape mode to the portrait mode, the video interface switches to the portrait mode and is displayed in non-full-screen mode, and the bullet comment disappears. Therefore, when the terminal device displaying the video interface switches between the landscape mode and the portrait mode, whether there is the bullet comment in the video interface of the target application is recognized, and the terminal device adjusts the device performance to improve the user experience.

It may be understood that when the video interface receives the user operation, the operation may be an operation of switching on or off the bullet comment by the user. Therefore, when the video interface receives the user operation, whether there is the bullet comment in the video interface of the target application is recognized, and the terminal device adjusts the device performance to improve the user experience.

It may be understood that when the video in the target application is displayed in full-screen mode, there is no other object in the video interface, to reduce interference caused by another object when whether there is the bullet comment in the video interface of the target application is recognized.

In a possible implementation, the obtaining the video frame rate of the target application includes: obtaining the video frame rate of the target application in a media codec Media Codec.

For example, the media codec may be configured to decode the video that needs to be played in the target application, to obtain the video frame rate, so that the terminal device can obtain the video frame rate of the target application from the media codec.

In this embodiment of this application, the video frame rate of the video in the target application is obtained from the media codec, to determine whether there is bullet comment drawing whose drawing frame rate is greater than the video frame rate in the drawing service, so that whether there is the bullet comment in the video interface of the target application is recognized, and the terminal device adjusts the device performance to improve the user experience.

In a possible implementation, the determining, according to the video frame rate and the drawing frequency corresponding to each layer, whether there is a bullet comment in a video interface of the target application includes: calculating a first quantity of drawing frame rates greater than the video frame rate in the drawing frequency corresponding to each layer; and when the first quantity is greater than 0, determining that there is the bullet comment in the video interface of the target application.

For example, after the video frame rate of the target application and the drawing frequency corresponding to each layer of the target application in the drawing service within the preset duration are obtained, the value relationship between the video frame rate and the drawing frequency corresponding to each layer is compared. In the scenario in which the bullet comment function is on in the video playing process, because the bullet comment dynamically scrolls for display, the drawing frequency of the bullet comment is greater than the video frame rate.

Based on this, the drawing frame rate that is greater than the video frame rate in the drawing frequency corresponding to each layer may be obtained. When the quantity of drawing frame rates greater than the video frame rate is greater than 0, it is determined that there is the bullet comment in the video interface of the target application. When the quantity of drawing frame rates greater than the video frame rate is not greater than 0, it is determined that there is no bullet comment in the video interface of the target application.

In a possible implementation, when there is no bullet comment in the video playing process, the target application includes the video layer in the drawing service, and it may be obtained that the drawing frequency corresponding to the video layer is not greater than the video frame rate. In this case, the first quantity is equal to 0, and it may be determined that there is no bullet comment in the video interface of the target application.

In another possible implementation, when there is the bullet comment in the video playing process, the video drawing and the bullet comment drawing are at the same layer, and the drawing frequency corresponding to the layer is the drawing frequency of the bullet comment. In this case, it may be obtained that the drawing frequency corresponding to the layer is greater than the video frame rate, the first quantity is greater than 0, and it may be determined that there is the bullet comment in the video interface of the target application.

In another possible implementation, when there is the bullet comment in the video playing process, the video drawing and the bullet comment drawing are at the different layers. In this case, it may be obtained that the drawing frequency corresponding to the bullet comment layer is greater than the video frame rate, the first quantity is greater than 0, and it may be determined that there is the bullet comment in the video interface of the target application.

In this embodiment of this application, because the drawing frequency of the bullet comment is greater than the video frame rate, the quantity of drawing frame rates greater than the video frame rate in the drawing frequency may be calculated to determine that there is the bullet comment in the video interface of the target application, so that the terminal device adjusts the device performance to improve the user experience.

In a possible implementation, the drawing frequency corresponding to each layer is recorded as a correspondence between a layer identifier and a drawing frequency corresponding to the layer identifier, a drawing frequency corresponding to any layer identifier is a ratio of a quantity of drawing times to the preset duration, the quantity of drawing times is a quantity of drawing times of the any layer identifier within the preset duration, and there are one or more layers of the target application in the drawing service.

In this embodiment of this application, when the drawing frequency corresponding to each layer is recorded, a layer identifier may be mapped one-to-one to a drawing frequency corresponding to the layer identifier. For example, the drawing frame rate corresponding to the video layer is 30 Hz, and the drawing frame rate corresponding to the bullet comment layer is 60 Hz.

In this embodiment of this application, a drawing frequency corresponding to any layer identifier may be a ratio of a quantity of drawing times within the preset duration to the preset duration. For example, if the preset duration is 4s, and the quantity of drawing times at the video layer is 120 within 4s, the drawing frame rate corresponding to the video layer is 30 Hz.

For example, when there is one layer of the target application in the drawing service, the following case may be included: When there is no bullet comment in the video playing process, the target application includes the video layer in the drawing service. Alternatively, when there is the bullet comment in the video playing process, the video drawing and the bullet comment drawing are at the same layer.

For example, when there are a plurality of layers of the target application in the drawing service, the following case may be included: When there is the bullet comment in the video playing process, the video drawing and the bullet comment drawing are at the different layers. In this case, the target application includes the video layer and the bullet comment layer in the drawing service.

In this embodiment of this application, the drawing frequency corresponding to each layer is recorded as the correspondence between a layer identifier and a drawing frequency corresponding to the layer identifier. When there are one or more layers of the target application in the drawing service, it is convenient to compare the value relationship between the video frame rate and the drawing frequency corresponding to each layer.

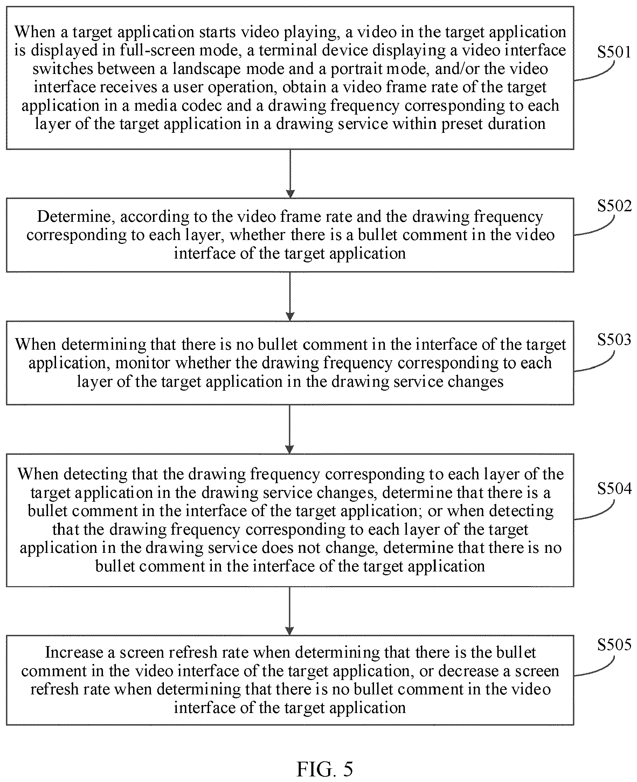

For example, on the basis of the foregoing embodiment, FIG. 5 is the schematic flowchart of a bullet comment recognition method according to the invention. Specific steps may be as follows:
S501: When a target application starts video playing, a video in the target application is displayed in full-screen mode, a terminal device displaying a video interface switches between a landscape mode and a portrait mode, and/or the video interface receives a user operation, obtain a video frame rate of the target application in a media codec Media Codec and a drawing frequency corresponding to each layer of the target application in a drawing service within preset duration.
S502: Determine, according to the video frame rate and the drawing frequency corresponding to each layer, whether there is a bullet comment in the video interface of the target application.

For example, for a specific implementation of step S502, refer to steps S5021 and S5022.

S5021: Calculate a first quantity of drawing frame rates greater than the video frame rate in the drawing frequency corresponding to each layer.

S5022: When the first quantity is greater than 0, determine that there is the bullet comment in the video interface of the target application. Alternatively, when the first quantity is not greater than 0, determine that there is no bullet comment in the video interface of the target application.

S503: When determining that there is no bullet comment in the video interface of the target application, monitor whether the drawing frequency corresponding to each layer of the target application in the drawing service changes.

For example, when it is determined through steps S501 and S502 that there is no bullet comment in the video interface of the target application, it indicates that there is no continuous bullet comments in the video interface of the target application. Therefore, whether there is a sudden bullet comment in the video interface of the target application may be determined by monitoring whether the drawing frequency corresponding to each layer of the target application in the drawing service changes. The continuous bullet comments may be understood as that bullet comments always exist and are continuous in a whole video playing process. The sudden bullet comment may be understood as that bullet comments appear a few times and are discontinuous in the whole video playing process. For example, the bullet comment appears once every seven minutes. Alternatively, the bullet comment appears only once in the whole video playing process.

For example, for a specific implementation of step S503, refer to steps S5031 to S5033.

S5031: Record a drawing frequency of each layer of the target application in the drawing service according to a preset period.

In this embodiment of this application, the preset period may be understood as a specific time interval. For example, the preset period may be 100 ms. A specific value of the preset period is not specifically limited in this embodiment of this application.

For example, the drawing frequency of each layer of the target application in the drawing service is recorded once every specific time interval.

S5032: For any record obtained according to the preset period, compare a drawing frequency in the record with the drawing frequency corresponding to each layer obtained within the preset duration.

In this embodiment of this application, the drawing frequency of each layer of the target application in the drawing service is recorded once every specific time interval, to form one record.

For example, because it has been determined in steps S501 and S502 that there is no bullet comment in the video interface of the target application, the obtained drawing frequency corresponding to each layer of the target application in the drawing service within the preset duration is a drawing frequency corresponding to each layer obtained when there is no bullet comment in the video interface of the target application. Therefore, whether the drawing frequency corresponding to each layer changes may be determined by comparing the drawing frequency in the any record obtained according to the preset period with the drawing frequency corresponding to each layer obtained within the preset duration.

S5033: For any layer in the drawing service, when a difference between a drawing frequency of the layer in any record and the drawing frequency corresponding to the layer obtained within the preset duration is greater than or equal to a threshold, determine that the drawing frequency corresponding to each layer of the target application in the drawing service changes; or when a difference between a drawing frequency of the layer in any record and the drawing frequency corresponding to the layer obtained within the preset duration is less than the threshold, determine that the drawing frequency corresponding to each layer of the target application in the drawing service does not change.

In this embodiment of this application, the any layer may be understood as any layer in the one or more layers included in the target application in the drawing service. For example, the any layer is either a video layer or a bullet comment layer.

It should be noted that the threshold may be set according to an actual situation or experience. For example, the threshold may be set to 10 Hz. A specific value of the threshold is not specifically limited in this embodiment of this application.

In a possible implementation, when there is no sudden bullet comment in the video playing process, the target application includes the video layer in the drawing service. In this case, for the video layer, a difference between a drawing frequency of the video layer in any record and a drawing frequency corresponding to the video layer obtained within the preset duration is less than the threshold, so that it can be determined that the drawing frequency corresponding to each layer of the target application in the drawing service does not change.

In another possible implementation, when there is the sudden bullet comment in the video playing process, video drawing and bullet comment drawing are at a same layer. In this case, for the layer, when the sudden bullet comment appears in the video playing process, a difference between a drawing frequency corresponding to the layer in the preset period and a drawing frequency corresponding to the layer obtained within the preset duration is greater than or equal to the threshold, so that it can be determined that the drawing frequency corresponding to each layer of the target application in the drawing service changes.

In another possible implementation, when there is the sudden bullet comment in the video playing process, and video drawing and bullet comment drawing are at different layers, the target application includes the video layer in the drawing service before the sudden bullet comment appears in the video playing process; and the target application includes the video layer and the bullet comment layer in the drawing service when the sudden bullet comment appears in the video playing process. Because the target application does not include the bullet comment layer in the drawing service before the sudden bullet comment appears in the video playing process, a difference between a drawing frequency corresponding to the bullet comment layer in the preset period and a drawing frequency corresponding to the bullet comment layer obtained in the preset duration is greater than or equal to the threshold, so that it can be determined that the drawing frequency corresponding to each layer of the target application in the drawing service changes.

This may also be understood as: When there is the sudden bullet comment in the video playing process, and the video drawing and the bullet comment drawing are at different layers, the target application includes the video layer in the drawing service before the sudden bullet comment appears in the video playing process, and includes the video layer and the bullet comment layer in the drawing service when the sudden bullet comment appears in the video playing process. A quantity of layers of the target application in the drawing service changes. In this way, it can be determined that the drawing frequency corresponding to each layer of the target application in the drawing service changes.

For example, for any record obtained according to the preset period, whether the drawing frequency corresponding to each layer of the target application in the drawing service changes may alternatively be determined by comparing the record with a previous record. Specifically, for any layer in the drawing service, when a difference between a drawing frequency of the layer in any record and a drawing frequency in a previous record is greater than or equal to the threshold, it is determined that the drawing frequency corresponding to each layer of the target application in the drawing service changes. Alternatively, when a difference between a drawing frequency of the layer in any record and a drawing frequency in a previous record is less than the threshold, it is determined that the drawing frequency corresponding to each layer of the target application in the drawing service does not change.

**In** this embodiment of this application, a difference between a drawing frequency of any layer in any record and a drawing frequency corresponding to the layer obtained within the preset duration or a drawing frequency in a previous record is calculated, to determine whether the drawing frequency corresponding to each layer of the target application in the drawing service changes, so that it is determined whether there is the sudden bullet comment in the video interface of the target application, and the terminal device adjusts device performance to improve user experience.

S504: When detecting that the drawing frequency corresponding to each layer of the target application in the drawing service changes, determine that there is the bullet comment in the video interface of the target application; or when detecting that the drawing frequency corresponding to each layer of the target application in the drawing service does not change, determine that there is no bullet comment in the video interface of the target application.

**In** this embodiment of this application, the bullet comment may be the sudden bullet comment. It should be noted that, for both continuous bullet comments and the sudden bullet comment, the terminal device performs processing as there is the bullet comment in the video interface of the target application.

For example, the monitoring may be stopped after it is determined that there is the bullet comment in the video interface of the target application.

**In** this embodiment of this application, it is simple and intuitive to determine, by monitoring whether the drawing frequency corresponding to each layer of the target application in the drawing service changes, whether there is the sudden bullet comment in the video interface of the target application, and the terminal device can adjust the device performance depending to whether there is the bullet comment in the video interface of the target application, to improve the user experience.

S505: Increase a screen refresh rate when determining that there is the bullet comment in the video interface of the target application, or decrease a screen refresh rate when determining that there is no bullet comment in the video interface of the target application.

In this embodiment of this application, the screen refresh rate may be understood as a quantity of times that an image on a screen is refreshed per second. A higher screen refresh rate indicates a higher frame rate the screen can support. For example, if a screen refresh rate of a terminal device is 120 Hz, the terminal device can support both frame rates of 60 FPS and 90 FPS, and can support a maximum frame rate of 120 FPS.

For example, the terminal device may adjust the device performance depending on whether there is the bullet comment in the video interface of the target application. Using the screen refresh rate as an example, for example, when a bullet comment function is on in the video playing process, only a refresh rate of 30 Hz is needed to meet a requirement of smoothly displaying an image of a played video. A requirement on the refresh rate when the bullet comment function is on in the video playing process is higher than that in the scenario in which the bullet comment is off. Therefore, the terminal device can adjust the screen refresh rate depending on whether there is the bullet comment. When recognizing that there is the bullet comment, the terminal device can correspondingly increase the screen refresh rate slightly to prevent a bullet comment scrolling image from being frozen. When recognizing that there is no bullet comment, the terminal device can correspondingly decrease the screen refresh rate slightly to reduce load and power consumption of a processor, thereby improving the user experience.

In the bullet comment recognition method provided in this embodiment of this application, the terminal device obtains the video frame rate of the target application and the drawing frequency corresponding to each layer of the target application in the drawing service within the preset duration; determines, according to the video frame rate and the drawing frequency corresponding to each layer, whether there is the bullet comment in the video interface of the target application; when determining that there is no bullet comment in the video interface of the target application, monitors whether the drawing frequency corresponding to each layer of the target application in the drawing service changes; and when detecting that the drawing frequency corresponding to each layer of the target application in the drawing service changes, determines that there is the bullet comment in the video interface of the target application; or when detecting that the drawing frequency corresponding to each layer of the target application in the drawing service does not change, determines that there is no bullet comment in the video interface of the target application. The terminal device can adjust the screen refresh rate depending on whether there is the bullet comment, to improve the user experience.

Implementations described in the foregoing example embodiments do not represent all implementations consistent with this application. On the contrary, the implementations are merely examples of the method that are consistent with some aspects of this application described in detail in the appended claims.

The foregoing describes the bullet comment recognition method in embodiments of this application. The following describes a terminal device for performing the bullet comment recognition method provided in embodiments of this application. A person skilled in the art may understand that the method and the apparatus may be mutually combined and referenced. The terminal device provided in embodiments of this application can perform the steps in the foregoing bullet comment recognition method.

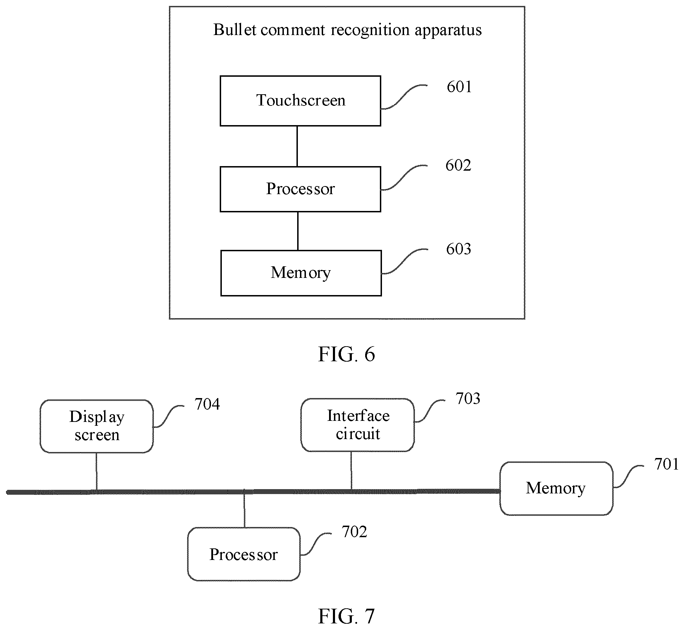

FIG. 6 is a schematic structural diagram of a bullet comment recognition apparatus according to an embodiment of this application. As shown in FIG. 6, the bullet comment recognition apparatus may be the terminal device in embodiments of this application. The bullet comment recognition apparatus includes: a touchscreen 601, where the touchscreen includes a touch panel and a display screen; one or more processors 602; a memory 603; a plurality of application programs; and one or more computer programs, where the one or more computer programs are stored in the memory 603, and include instructions; and the instructions, when executed by the bullet comment recognition apparatus, cause the bullet comment recognition apparatus to perform the following steps: obtaining a video frame rate of a target application and a drawing frequency corresponding to each layer of the target application in a drawing service within preset duration; and determining, according to the video frame rate and the drawing frequency corresponding to each layer, whether there is a bullet comment in a video interface of the target application.

Optionally, the determining, according to the video frame rate and the drawing frequency corresponding to each layer, whether there is a bullet comment in a video interface of the target application includes: calculating a first quantity of drawing frame rates greater than the video frame rate in the drawing frequency corresponding to each layer; and when the first quantity is greater than 0, determining that there is the bullet comment in the video interface of the target application.

Optionally, the drawing frequency corresponding to each layer is recorded as a correspondence between a layer identifier and a drawing frequency corresponding to the layer identifier, a drawing frequency corresponding to any layer identifier is a ratio of a quantity of drawing times to the preset duration, the quantity of drawing times is a quantity of drawing times of the any layer identifier within the preset duration, and there are one or more layers of the target application in the drawing service.

Optionally, after the determining, according to the video frame rate and the drawing frequency corresponding to each layer, whether there is a bullet comment in a video interface of the target application, the method further includes: when determining that there is no bullet comment in the video interface of the target application, monitoring whether the drawing frequency corresponding to each layer of the target application in the drawing service changes; and when detecting that the drawing frequency corresponding to each layer of the target application in the drawing service changes, determining that there is a bullet comment in the video interface of the target application.

Optionally, the monitoring whether the drawing frequency corresponding to each layer of the target application in the drawing service changes includes: recording a drawing frequency of each layer of the target application in the drawing service according to a preset period; for any record obtained according to the preset period, comparing a drawing frequency in the record with the drawing frequency corresponding to each layer obtained within the preset duration; and for any layer in the drawing service, when a difference between a drawing frequency of the layer in any record and the drawing frequency corresponding to the layer obtained within the preset duration is greater than or equal to a threshold, determining that the drawing frequency corresponding to each layer of the target application in the drawing service changes; or when a difference between a drawing frequency of the layer in any record and the drawing frequency corresponding to the layer obtained within the preset duration is less than the threshold, determining that the drawing frequency corresponding to each layer of the target application in the drawing service does not change.

Optionally, the obtaining a video frame rate of a target application and a drawing frequency corresponding to each layer of the target application in a drawing service within preset duration includes: when the target application starts video playing, a video in the target application is displayed in full-screen mode, a terminal device displaying the video interface of the target application switches between a landscape mode and a portrait mode, and/or the video interface of the target application receives a user operation, obtaining the video frame rate of the target application and the drawing frequency corresponding to each layer of the target application in the drawing service within the preset duration.

Optionally, the obtaining the video frame rate of the target application includes: obtaining the video frame rate of the target application in a media codec Media Codec.

Optionally, the method further includes: increasing a screen refresh rate when determining that there is the bullet comment in the video interface of the target application; or decreasing a screen refresh rate when determining that there is no bullet comment in the video interface of the target application.

FIG. 7 is a schematic diagram of a hardware structure of a bullet comment recognition apparatus according to an embodiment of this application. Refer to FIG. 7. The apparatus includes: a memory 701, a processor 702, and a display screen 704. The apparatus may further include an interface circuit 703. The memory 701, the processor 702, the interface circuit 703, and the display screen 704 may perform communication. For example, the memory 701, the processor 702, the interface circuit 703, and the display screen 704 may perform communication through a communication bus. The memory 701 is configured to store computer-executable instructions, the processor 702 controls execution, and the display screen 704 performs displaying, to implement the bullet comment recognition method provided in the following embodiments of this application.

In a possible implementation, the computer-executable instructions in this embodiment of this application may also be referred to as application program code. This is not specifically limited in this embodiment of this application.

Optionally, the interface circuit 703 may further include a transmitter and/or a receiver. Optionally, the processor 702 may include one or more CPUs, or may be another general-purpose processor, a digital signal processor (digital signal processor, DSP), an application specific integrated circuit (application specific integrated circuit, ASIC), or the like. The general-purpose processor may be a microprocessor, or the processor may be any conventional processor or the like. The steps of the methods disclosed with reference to this application may be directly implemented by a hardware processor, or may be implemented by a combination of hardware and a software module in the processor.

The apparatus in this embodiment may be accordingly configured to perform the steps in the foregoing method embodiments, implementation principles and technical effects of the apparatus and the method embodiments are similar, and details are not described herein again.

An embodiment of this application further provides a computer program product, including one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, including one or more usable media. For example, the usable medium may include a magnetic medium (for example, a floppy disk, a hard disk, or a magnetic tape), an optical medium (for example, a digital versatile disc (digital versatile disc, DVD)), a semi-conductive medium (for example, a solid state disk (solid state disk, SSD)), or the like.

An embodiment of this application further provides a computer-readable storage medium. All or some of the methods in the foregoing embodiments may be implemented by software, hardware, firmware, or any combination thereof. If a function is implemented in software, the function may be stored in a computer-readable medium or transmitted between computer-readable media as one or more instructions or code. The computer-readable medium may include a computer storage medium and a communication medium, and may further include any medium that can transmit a computer program from one place to another. The storage medium may be any target medium accessible to a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure and that may be accessed by a computer. Furthermore, any connection is appropriately referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared, radio, and microwave), the coaxial cable, the optical fiber cable, the twisted pair, the DSL or the wireless technologies such as the infrared, the radio, and the microwave are included in the definition of the medium. For example, a magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. A combination of the foregoing should also be included in the scope of the computer-readable medium.

Embodiments of this application are described with reference to the flowcharts and/or block diagrams of the method, the device (system), and the computer program product according to embodiments of this application. It should be understood that each procedure and/or block in the flowcharts and/or block diagrams and a combination of procedures and/or blocks in the flowcharts and/or block diagrams can be implemented by computer program instructions. These computer program instructions may be provided for a general-purpose computer, a special-purpose computer, an embedded processor, or a processing unit of any other programmable data processing device to generate a machine, so that the instructions executed by the computer or the processing unit of the any other programmable data processing device generate an apparatus for implementing a specific function in one or more procedures in the flowcharts and/or in one or more blocks in the block diagrams.

The foregoing specific implementations further describe the objectives, technical solutions, and beneficial effects of the present invention in detail. It should be understood that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. A bullet comment recognition method, applied to an electronic device, and comprising:
playing a video in a target application;
obtaining (S501) a video frame rate of the target application in a media codec and a drawing frequency corresponding to each layer of the target application in a drawing service within a preset duration;
**characterised in that** the method further comprises:
determining (S502) that there is a bullet comment in a video interface of the target application when at least one drawing frequency corresponding to one or more layers of the target application in the drawing service is greater than the video frame rate of the video within the preset duration;
wherein a drawing frequency corresponding to each layer of the target application in a drawing service is a ratio of a quantity of drawing times that corresponds to each layer within the preset duration to the preset duration;
wherein the method further comprises:
when determining that there is no bullet comment in the video interface of the target application, monitoring (S503) whether the drawing frequency corresponding to each layer of the target application in the drawing service changes;
when detecting that the drawing frequency corresponding to each layer of the target application in the drawing service changes, determining (S504) that there is the bullet comment in the video interface of the target application, or when detecting that the drawing frequency corresponding to each layer of the target application in the drawing service does not change, determining (S504) that there is no bullet comment in the video interface of the target application; and
increasing (S505) a screen refresh rate when determining that there is the bullet comment in the video interface of the target application or decreasing (S505) a screen refresh rate when determining that there is no bullet comment in the video interface of the target application.

2. The method according to claim 1, wherein before the determining (S502) that there is a bullet comment in a video interface of the target application when at least one drawing frequency corresponding to the target application is greater than the video frame rate of the video and increasing (S505) a screen refresh rate, the method comprises:
switching on a bullet comment function of the target application.

3. The method according to claim 1 or 2, wherein a video playing interface of the target application for playing the video comprises a first control, the first control is used for switching on or off the bullet comment function, and the method comprises:
receiving an operation of switching on the bullet comment function.

4. The method according to claim 3, wherein after the receiving an operation of switching on the bullet comment function, the method comprises: displaying a bullet comment in the video playing interface.

5. The method according to any one of claims 1 to 4, wherein the target application comprises: a video application, a live-streaming application, or a music application capable of playing a music video.

6. The method according to any one of claims 2 to 5, wherein
when the bullet comment is displayed in the video playing interface, the screen refresh rate is 60 Hz.

7. The method according to any one of claims 2 to 6, wherein
when the bullet comment function is switched off, the screen refresh rate is 30 Hz.

8. The method according to any one of claims 1 to 7, wherein before the determining (S502) that there is a bullet comment in a video interface of the target application when at least one drawing frequency corresponding to the target application is greater than the video frame rate of the video and increasing (S505) a screen refresh rate, the method comprises:
switching the electronic device from a landscape mode to a portrait mode or from a portrait mode to a landscape mode.

9. The method according to any one of claims 1 to 8, wherein that at least one drawing frequency corresponding to the target application is greater than the video frame rate of the video comprises:
at least one drawing frequency in the drawing frequency corresponding to the one or more layers of the target application in the drawing service is greater than the video frame rate of the video.

10. The method according to any one of claims 1 to 9, wherein the drawing frequency corresponding to the one or more layers is recorded as a correspondence between a layer identifier and a drawing frequency corresponding to the layer identifier, a drawing frequency corresponding to any layer identifier is a ratio of a quantity of drawing times to preset duration, and the quantity of drawing times is a quantity of drawing times of the any layer identifier within the preset duration.

11. The method according to any one of claims 1 to 10, wherein the method further comprises:
determining that there is no bullet comment in the video interface of the target application when none of the at least one drawing frequency corresponding to the one or more layers of the target application in the drawing service is greater than the video frame rate of the video within a preset duration; and
decreasing the screen refresh rate when determining that there is no bullet comment in the video interface of the target application.

12. The method according to any one of claims 1 to 10, wherein the monitoring whether the drawing frequency corresponding to each layer of the target application in the drawing service changes comprises:
recording a drawing frequency of the one or more layers of the target application in the drawing service according to a preset period;
for any record obtained according to the preset period, comparing a drawing frequency in the record with the drawing frequency corresponding to the one or more layers obtained within the preset duration; and
for any layer in the drawing service, when a difference between a drawing frequency in any record of the layer and the drawing frequency corresponding to the layer obtained within the preset duration is greater than or equal to a threshold, determining that the drawing frequency corresponding to each layer of the target application in the drawing service changes; and determining that there is the bullet comment in the video interface of the target application, and increasing the screen refresh rate when determining that there is the bullet comment in the video interface of the target application; or
when a difference between a drawing frequency in any record of the layer and the drawing frequency corresponding to the layer obtained within the preset duration is less than the threshold, determining that the drawing frequency corresponding to each layer of the target application in the drawing service does not change, and determining that there is no bullet comment in the video interface of the target application; and decreasing the screen refresh rate when determining that there is no bullet comment in the video interface of the target application.

13. An electronic device, comprising: a processor and a memory, wherein the processor is configured to call a program in the memory, to cause the electronic device to perform the method according to any one of claims 1 to 12.

14. A computer-readable storage medium, wherein the computer-readable storage medium stores a computer program; and when the computer program is executed by a processor, the method according to any one of claims 1 to 12 is implemented.

## Patentansprüche

1. Bullet-Kommentar-Erkennungsverfahren, das auf eine elektronische Vorrichtung angewendet wird und umfasst:
Abspielen eines Videos in einer Zielanwendung;
Erhalten (S501) einer Videobildrate der Zielanwendung in einem Medien-Codec und einer Zeichenfrequenz, die jeder Schicht der Zielanwendung in einem Zeichendienst entspricht, innerhalb einer voreingestellten Dauer;
**dadurch gekennzeichnet, dass** das Verfahren ferner umfasst:
Bestimmen (S502), dass ein Bullet-Kommentar in einer Videoschnittstelle der Zielanwendung vorhanden ist, wenn mindestens eine Zeichenfrequenz, die einer oder mehreren Schichten der Zielanwendung im Zeichendienst entspricht, größer als die Videobildrate des Videos innerhalb der voreingestellten Dauer ist;
wobei eine Zeichenfrequenz, die jeder Schicht der Zielanwendung in einem Zeichendienst entspricht, ein Verhältnis einer Anzahl von Zeichenvorgängen, die jeder Schicht innerhalb der voreingestellten Dauer entspricht, zu der voreingestellten Dauer ist;
wobei das Verfahren ferner umfasst:
wenn bestimmt wird, dass kein Bullet-Kommentar in der Videoschnittstelle der Zielanwendung vorhanden ist, Überwachen (S503), ob sich die Zeichenfrequenz, die jeder Schicht der Zielanwendung im Zeichendienst entspricht, ändert;
wenn erfasst wird, dass sich die Zeichenfrequenz, die jeder Schicht der Zielanwendung im Zeichendienst entspricht, ändert, Bestimmen (S504), dass der Bullet-Kommentar in der Videoschnittstelle der Zielanwendung vorhanden ist, oder wenn erfasst wird, dass sich die Zeichenfrequenz, die jeder Schicht der Zielanwendung im Zeichendienst entspricht, nicht ändert, Bestimmen (S504), dass kein Bullet-Kommentar in der Videoschnittstelle der Zielanwendung vorhanden ist; und
Erhöhen (S505) einer Bildschirmaktualisierungsrate, wenn bestimmt wird, dass der Bullet-Kommentar in der Videoschnittstelle der Zielanwendung vorhanden ist, oder Verringern (S505) einer Bildschirmaktualisierungsrate, wenn bestimmt wird, dass kein Bullet-Kommentar in der Videoschnittstelle der Zielanwendung vorhanden ist.

2. Verfahren nach Anspruch 1, wobei vor dem Bestimmen (S502), dass ein Bullet-Kommentar in einer Videoschnittstelle der Zielanwendung vorhanden ist, wenn mindestens eine Zeichenfrequenz, die der Zielanwendung entspricht, größer als die Videobildrate des Videos ist, und dem Erhöhen (S505) einer Bildschirmaktualisierungsrate das Verfahren umfasst:
Einschalten einer Bullet-Kommentar-Funktion der Zielanwendung.

3. Verfahren nach Anspruch 1 oder 2, wobei eine Videoabspielschnittstelle der Zielanwendung zum Abspielen des Videos ein erstes Bedienelement umfasst, wobei das erste Bedienelement zum Ein- oder Ausschalten der Bullet-Kommentar-Funktion verwendet wird, und das Verfahren umfasst:
Empfangen einer Bedienung zum Einschalten der Bullet-Kommentar-Funktion.

4. Verfahren nach Anspruch 3, wobei nach dem Empfangen einer Bedienung zum Einschalten der Bullet-Kommentar-Funktion das Verfahren umfasst: Anzeigen eines Bullet-Kommentars in der Videoabspielschnittstelle.

5. Verfahren nach einem der Ansprüche 1 bis 4, wobei die Zielanwendung umfasst: eine Videoanwendung, eine Live-Streaming-Anwendung oder eine Musikanwendung, die befähigt ist, ein Musikvideo abzuspielen.

6. Verfahren nach einem der Ansprüche 2 bis 5, wobei
wenn der Bullet-Kommentar in der Videoabspielschnittstelle angezeigt wird, die Bildschirmaktualisierungsrate 60 Hz beträgt.

7. Verfahren nach einem der Ansprüche 2 bis 6, wobei
wenn die Bullet-Kommentar-Funktion ausgeschaltet ist, die Bildschirmaktualisierungsrate 30 Hz beträgt.

8. Verfahren nach einem der Ansprüche 1 bis 7, wobei vor dem Bestimmen (S502), dass ein Bullet-Kommentar in einer Videoschnittstelle der Zielanwendung vorhanden ist, wenn mindestens eine Zeichenfrequenz, die der Zielanwendung entspricht, größer als die Videobildrate des Videos ist, und dem Erhöhen (S505) einer Bildschirmaktualisierungsrate das Verfahren umfasst:
Umschalten der elektronischen Vorrichtung von einem Querformatmodus in einen Hochformatmodus oder von einem Hochformatmodus in einen Querformatmodus.

9. Verfahren nach einem der Ansprüche 1 bis 8, wobei, dass mindestens eine Zeichenfrequenz, die der Zielanwendung entspricht, größer als die Videobildrate des Videos ist, umfasst, dass:
mindestens eine Zeichenfrequenz unter den Zeichenfrequenzen, die der einen oder den mehreren Schichten der Zielanwendung im Zeichendienst entsprechen, größer als die Videobildrate des Videos ist.

10. Verfahren nach einem der Ansprüche 1 bis 9, wobei die Zeichenfrequenz, die der einen oder den mehreren Schichten entspricht, als eine Entsprechung zwischen einer Schichtkennung und einer Zeichenfrequenz, die der Schichtkennung entspricht, aufgezeichnet wird, eine Zeichenfrequenz, die einer beliebigen Schichtkennung entspricht, ein Verhältnis einer Anzahl von Zeichenvorgängen zu einer voreingestellten Dauer ist und die Anzahl von Zeichenvorgängen eine Anzahl von Zeichenvorgängen der beliebigen Schichtkennung innerhalb der voreingestellten Dauer ist.

11. Verfahren nach einem der Ansprüche 1 bis 10, wobei das Verfahren ferner umfasst:
Bestimmen, dass kein Bullet-Kommentar in der Videoschnittstelle der Zielanwendung vorhanden ist, wenn keine der mindestens einen Zeichenfrequenz, die der einen oder den mehreren Schichten der Zielanwendung im Zeichendienst entspricht, größer als die Videobildrate des Videos innerhalb einer voreingestellten Dauer ist; und
Verringern der Bildschirmaktualisierungsrate, wenn bestimmt wird, dass kein Bullet-Kommentar in der Videoschnittstelle der Zielanwendung vorhanden ist.

12. Verfahren nach einem der Ansprüche 1 bis 10, wobei das Überwachen, ob sich die Zeichenfrequenz, die jeder Schicht der Zielanwendung im Zeichendienst entspricht, ändert, umfasst:
Aufzeichnen einer Zeichenfrequenz der einen oder der mehreren Schichten der Zielanwendung im Zeichendienst gemäß einer voreingestellten Periode;
für jeden gemäß der voreingestellten Periode erhaltenen Datensatz, Vergleichen einer Zeichenfrequenz in dem Datensatz mit der Zeichenfrequenz, die der einen oder den mehreren Schichten entspricht, die innerhalb der voreingestellten Dauer erhalten wurde; und
für jede Schicht im Zeichendienst, wenn eine Differenz zwischen einer Zeichenfrequenz in einem beliebigen Datensatz der Schicht und der Zeichenfrequenz, die der Schicht entspricht, die innerhalb der voreingestellten Dauer erhalten wurde, größer als ein oder gleich einem Schwellenwert ist, Bestimmen, dass sich die Zeichenfrequenz, die jeder Schicht der Zielanwendung im Zeichendienst entspricht, ändert; und Bestimmen, dass der Bullet-Kommentar in der Videoschnittstelle der Zielanwendung vorhanden ist, und Erhöhen der Bildschirmaktualisierungsrate, wenn bestimmt wird, dass der Bullet-Kommentar in der Videoschnittstelle der Zielanwendung vorhanden ist; oder
wenn eine Differenz zwischen einer Zeichenfrequenz in einem beliebigen Datensatz der Schicht und der Zeichenfrequenz, die der Schicht entspricht, die innerhalb der voreingestellten Dauer erhalten wurde, kleiner als der Schwellenwert ist, Bestimmen, dass sich die Zeichenfrequenz, die jeder Schicht der Zielanwendung im Zeichendienst entspricht, nicht ändert, und Bestimmen, dass kein Bullet-Kommentar in der Videoschnittstelle der Zielanwendung vorhanden ist; und Verringern der Bildschirmaktualisierungsrate, wenn bestimmt wird, dass kein Bullet-Kommentar in der Videoschnittstelle der Zielanwendung vorhanden ist.

13. Elektronische Vorrichtung, umfassend: einen Prozessor und einen Speicher, wobei der Prozessor konfiguriert ist, ein Programm im Speicher aufzurufen, um die elektronische Vorrichtung zu veranlassen, das Verfahren nach einem der Ansprüche 1 bis 12 durchzuführen.

14. Computerlesbares Speichermedium, wobei das computerlesbare Speichermedium ein Computerprogramm speichert; und wenn das Computerprogramm von einem Prozessor ausgeführt wird, das Verfahren nach einem der Ansprüche 1 bis 12 implementiert wird.

## Revendications

1. Procédé de reconnaissance de commentaire de type bullet, appliqué à un dispositif électronique, et comprenant :
la lecture d'une vidéo dans une application cible ;
l'obtention (S501) d'une fréquence de trame vidéo de l'application cible dans un codec multimédia et d'une fréquence de dessin correspondant à chaque couche de l'application cible dans un service de dessin pendant une durée prédéfinie ;
**caractérisé en ce que** le procédé comprend en outre :
la détermination (S502) du fait qu'il y a un commentaire de type bullet dans une interface vidéo de l'application cible lorsqu'au moins une fréquence de dessin correspondant à une ou plusieurs couches de l'application cible dans le service de dessin est supérieure à la fréquence de trame vidéo de la vidéo pendant la durée prédéfinie ;
dans lequel une fréquence de dessin correspondant à chaque couche de l'application cible dans un service de dessin est un rapport d'un nombre d'opérations de dessin qui correspond à chaque couche pendant la durée prédéfinie sur la durée prédéfinie ;
dans lequel le procédé comprend en outre :
lors de la détermination du fait qu'il n'y a pas de commentaire de type bullet dans l'interface vidéo de l'application cible, la surveillance (S503) pour savoir si la fréquence de dessin correspondant à chaque couche de l'application cible dans le service de dessin change ;
lors de la détection du fait que la fréquence de dessin correspondant à chaque couche de l'application cible dans le service de dessin change, la détermination (S504) du fait qu'il y a le commentaire de type bullet dans l'interface vidéo de l'application cible, ou lors de la détection du fait que la fréquence de dessin correspondant à chaque couche de l'application cible dans le service de dessin ne change pas, la détermination (S504) du fait qu'il n'y a pas de commentaire de type bullet dans l'interface vidéo de l'application cible ; et
l'augmentation (S505) d'un taux de rafraîchissement d'écran lors de la détermination du fait qu'il y a le commentaire de type bullet dans l'interface vidéo de l'application cible ou la diminution (S505) d'un taux de rafraîchissement d'écran lors de la détermination du fait qu'il n'y a pas de commentaire de type bullet dans l'interface vidéo de l'application cible.

2. Procédé selon la revendication 1, dans lequel avant la détermination (S502) du fait qu'il y a un commentaire de type bullet dans une interface vidéo de l'application cible lorsqu'au moins une fréquence de dessin correspondant à l'application cible est supérieure à la fréquence de trame vidéo de la vidéo et l'augmentation (S505) d'un taux de rafraîchissement d'écran, le procédé comprend :
l'activation d'une fonction de commentaire de type bullet de l'application cible.

3. Procédé selon la revendication 1 ou 2, dans lequel une interface de lecture vidéo de l'application cible pour lire la vidéo comprend une première commande, la première commande est utilisée pour activer ou désactiver la fonction de commentaire de type bullet, et le procédé comprend :
la réception d'une opération d'activation de la fonction de commentaire de type bullet.

4. Procédé selon la revendication 3, dans lequel après la réception d'une opération d'activation de la fonction de commentaire de type bullet, le procédé comprend : l'affichage d'un commentaire de type bullet dans l'interface de lecture vidéo.

5. Procédé selon l'une quelconque des revendications 1 à 4, dans lequel l'application cible comprend : une application vidéo, une application de diffusion en direct, ou une application musicale capable de lire une vidéo musicale.

6. Procédé selon l'une quelconque des revendications 2 à 5, dans lequel
lorsque le commentaire de type bullet est affiché dans l'interface de lecture vidéo, le taux de rafraîchissement d'écran est de 60 Hz.

7. Procédé selon l'une quelconque des revendications 2 à 6, dans lequel
lorsque la fonction de commentaire de type bullet est désactivée, le taux de rafraîchissement d'écran est de 30 Hz.

8. Procédé selon l'une quelconque des revendications 1 à 7, dans lequel avant la détermination (S502) du fait qu'il y a un commentaire de type bullet dans une interface vidéo de l'application cible lorsqu'au moins une fréquence de dessin correspondant à l'application cible est supérieure à la fréquence de trame vidéo de la vidéo et l'augmentation (S505) d'un taux de rafraîchissement d'écran, le procédé comprend :
la commutation du dispositif électronique d'un mode paysage à un mode portrait ou d'un mode portrait à un mode paysage.

9. Procédé selon l'une quelconque des revendications 1 à 8, dans lequel le fait qu'au moins une fréquence de dessin correspondant à l'application cible soit supérieure à la fréquence de trame vidéo de la vidéo comprend le fait que :
au moins une fréquence de dessin parmi les fréquences de dessin correspondant à ladite une ou plusieurs couches de l'application cible dans le service de dessin est supérieure à la fréquence de trame vidéo de la vidéo.

10. Procédé selon l'une quelconque des revendications 1 à 9, dans lequel la fréquence de dessin correspondant à la ou aux couches est enregistrée sous la forme d'une correspondance entre un identifiant de couche et une fréquence de dessin correspondant à l'identifiant de couche, une fréquence de dessin correspondant à un quelconque identifiant de couche est un rapport d'un nombre d'opérations de dessin sur une durée prédéfinie, et le nombre d'opérations de dessin est un nombre d'opérations de dessin dudit identifiant de couche quelconque pendant la durée prédéfinie.

11. Procédé selon l'une quelconque des revendications 1 à 10, dans lequel le procédé comprend en outre :
la détermination du fait qu'il n'y a pas de commentaire de type bullet dans l'interface vidéo de l'application cible lorsqu'aucune de ladite au moins une fréquence de dessin correspondant à la ou aux couches de l'application cible dans le service de dessin n'est supérieure à la fréquence de trame vidéo de la vidéo pendant une durée prédéfinie ; et
la diminution du taux de rafraîchissement d'écran lors de la détermination du fait qu'il n'y a pas de commentaire de type bullet dans l'interface vidéo de l'application cible.

12. Procédé selon l'une quelconque des revendications 1 à 10, dans lequel la surveillance pour savoir si la fréquence de dessin correspondant à chaque couche de l'application cible dans le service de dessin change comprend :
l'enregistrement d'une fréquence de dessin de la ou des couches de l'application cible dans le service de dessin selon une période prédéfinie ;
pour tout enregistrement obtenu selon la période prédéfinie, la comparaison d'une fréquence de dessin dans l'enregistrement avec la fréquence de dessin correspondant à la ou aux couches obtenue pendant la durée prédéfinie ; et
pour toute couche dans le service de dessin, lorsqu'une différence entre une fréquence de dessin dans un quelconque enregistrement de la couche et la fréquence de dessin correspondant à la couche obtenue pendant la durée prédéfinie est supérieure ou égale à un seuil, la détermination du fait que la fréquence de dessin correspondant à chaque couche de l'application cible dans le service de dessin change ; et la détermination du fait qu'il y a le commentaire de type bullet dans l'interface vidéo de l'application cible, et l'augmentation du taux de rafraîchissement d'écran lors de la détermination du fait qu'il y a le commentaire de type bullet dans l'interface vidéo de l'application cible ; ou
lorsqu'une différence entre une fréquence de dessin dans un quelconque enregistrement de la couche et la fréquence de dessin correspondant à la couche obtenue pendant la durée prédéfinie est inférieure au seuil, la détermination du fait que la fréquence de dessin correspondant à chaque couche de l'application cible dans le service de dessin ne change pas, et la détermination du fait qu'il n'y a pas de commentaire de type bullet dans l'interface vidéo de l'application cible ; et la diminution du taux de rafraîchissement d'écran lors de la détermination du fait qu'il n'y a pas de commentaire de type bullet dans l'interface vidéo de l'application cible.

13. Dispositif électronique, comprenant : un processeur et une mémoire, dans lequel le processeur est configuré pour appeler un programme dans la mémoire, pour amener le dispositif électronique à exécuter le procédé selon l'une quelconque des revendications 1 à 12.

14. Support de stockage lisible par ordinateur, dans lequel le support de stockage lisible par ordinateur stocke un programme informatique ; et lorsque le programme informatique est exécuté par un processeur, le procédé selon l'une quelconque des revendications 1 à 12 est mis en œuvre.
